(19) Europäisches Patentamt / European Patent Office / Office européen des brevets

(11) **EP 2 549 616 B1**

(12) **EUROPEAN PATENT SPECIFICATION**

(45) Date of publication and mention
of the grant of the patent:
**25.03.2020 Bulletin 2020/13**

(51) Int Cl.:
*H02J 3/38* *(2006.01)*          *H02M 7/493* *(2007.01)*

(21) Application number: **11175099.8**

(22) Date of filing: **22.07.2011**

(54) **An arrangement and a method for supplying electric power**

Anordnung und Verfahren für elektrische Versorgung

Agencement et procédé pour fournir de l'alimentation électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.01.2013 Bulletin 2013/04**

(73) Proprietor: **ABB Schweiz AG
5400 Baden (CH)**

(72) Inventor: **Sao, Charles
723 40 Västerås (SE)**

(74) Representative: **Kransell & Wennborg KB
P.O. Box 27834
115 93 Stockholm (SE)**

(56) References cited:
**GB-A- 2 429 306**

- **SAHOO L K ET AL: "Synchronization and operation of parallel inverters using droop control", POWER ELECTRONICS AND ECCE ASIA (ICPE&ECCE), 2011 IEEE 8TH INTERNATIONAL CONFERENCE ON, IEEE, 30 May 2011 (2011-05-30), pages 2406-2412, XP031956125, DOI: 10.1109/ICPE.2011.5944529 ISBN: 978-1-61284-958-4**
- **MOHAMED Y ET AL: "Adaptive Decentralized Droop Controller to Preserve Power Sharing Stability of Paralleled Inverters in Distributed Generation Microgrids", IEEE TRANSACTIONS ON POWER ELECTRONICS, IEEE SERVICE CENTER, PISCATAWAY, NJ, US, vol. 23, no. 6, 1 November 2008 (2008-11-01), pages 2806-2816, XP011239352, ISSN: 0885-8993, DOI: 10.1109/TPEL.2008.2005100**

**Description**

TECHNICAL FIELD OF THE INVENTION AND BACKGROUND ART

The present invention relates to an arrangement for supplying electric power to a load through a filter bus, in which the arrangement comprises at least two Voltage Source Converters connected in parallel to said filter bus through an inductor each and configured to share said load, as well as a method for supplying electric power to a load through such an arrangement.

The invention is not restricted to any particular levels of voltage on a said filter bus or powers transferrable to a said load, but 1 kV - 32 kV and 100 kW - several MW's, respectively, may be mentioned as examples.

Parallel operation of electric power generators, to which said Voltage Source Converters are connected, is used to share a load connected to said filter bus in common to the converters. One such application is centralized frequency conversion shore to ship power supply, in which said load may be one or several ships connected to said filter bus. An application of such paralleling of converters may also be one or several micro-grids.

There are some advantages of paralleling a plurality of electric power supply units for feeding electric power to said load. One of them is that an increased power rating can be met by using a plurality of lower electric power supply units connected in parallel to a said filter bus instead of using one single high electric power supply unit. This means that maintenance of one such electric power supply unit may be carried out without having to completely shut down the supply of electric power to a said load, since the other electric power supply units may then temporarily take over the part of the load from the unit stopped for maintenance. The redundancy obtained by paralleling several electric power supply units also increases the availability of electric power to a said load, since electric power may be fed thereto as long as a sufficient number of electric power supply units are in operation.

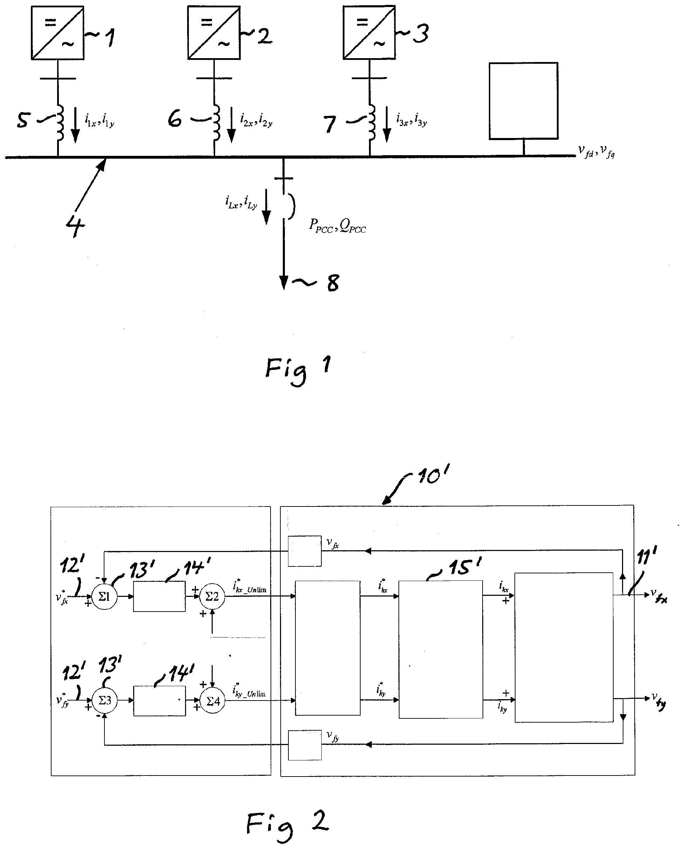

Appended Fig 1 schematically illustrates a said arrangement having three Voltage Source Converters 1-3 connected in parallel to a filter bus 4 through an inductor 5-7 each to share a common load 8, which in fact may be a plurality of loads, connected to the filter bus. One way to make these converters share the common load is to use a master controller that sets the terminal voltages of all the converters. However, since the electric power generator units to which the converters are connected or belong to may be located quite far apart with significant line impedance between them, parallel operation of the converters should be achieved with no or minimum control communication. An alternative control philosophy that overcomes the dependency of all the converters on a single master controller is to have an individual controller for each converter in the parallel combination.

The use of frequency versus real power and voltage versus reactive power droop schemes for load sharing of independently controlled generators and Voltage Source Converters is well known. However, the converters connected in parallel to a common filter bus through interface inductors and employing such droop schemes operate as voltage sources. Even if they actively regulate the filter bus voltage, they do not have underlying current control loops that regulate and limit their output currents dynamically.

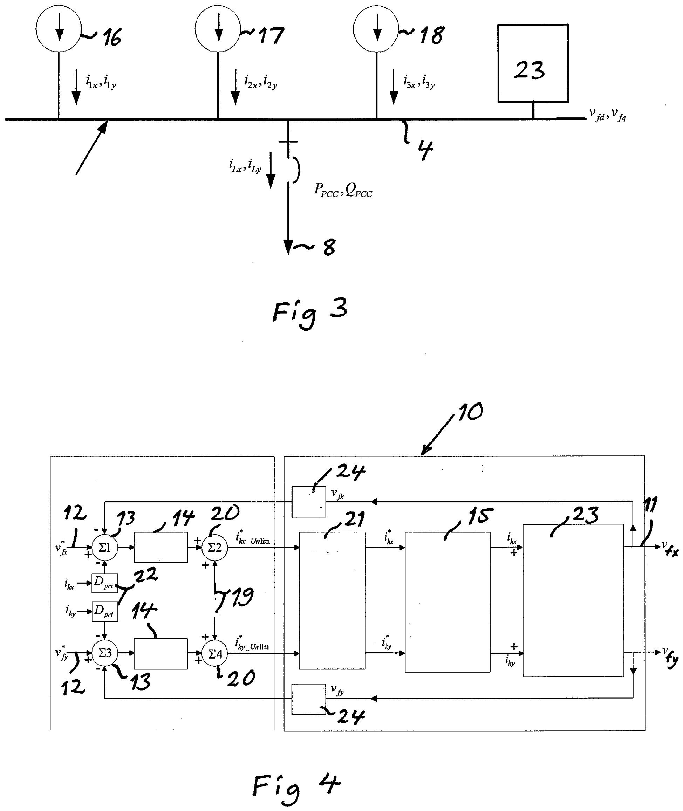

In order to achieve dynamic current control and current limiting capability each converter in Fig 1 must employ a voltage vector control, e.g. a d-q frame or α-β frame voltage control, with an underlying current controller. This is to regulate the filter bus voltage vector while maintaining dynamic control of the converter current. An example of a control unit obtaining this for one said converter is shown in appended Fig 2. This control unit 10' comprises first means 11' (indicated by signal arrows), configured to produce two perpendicularly-intersecting filter bus voltage vectors $v_{fx}$, $v_{fy}$ from the filter bus voltage $v_f$, second means 12' (indicated by signal arrows) configured to produce a filter bus voltage reference vector $v_{fx}^*$, $v_{fy}^*$ for each of said two filter bus voltage vectors, third means 13' configured to sum each said filter bus voltage vector and the filter bus voltage reference vector associated therewith, a regulator 14' connected to receive the result of the summing of said third means so as to produce a current reference vector for each filter bus voltage vector, and fourth means 15' configured to involve current control in the control of the converter based on said current reference vectors for obtaining two vectors ($i_{kx}$, $i_{ky}$) of the current from the $k^{th}$ converter perpendicularly-intersecting each other. With this control scheme the converters can be modeled as current sources 16-18 that are connected directly to the filter bus 4 as shown in appended Fig 3. These current sources adjust their output currents within current limits to regulate the filter bus voltage. However, the control scheme of Fig 2 would work if only one of the converters in Fig 1 is in operation at a time. If multiple converters are switched on, the controllers of said fourth means would fight with one another because they are all attempting to regulate the same voltage vector of the filter bus. Moreover, there is nothing in Fig 2 that guarantees that they will share a common load. The well known frequency versus real power and voltage versus reactive power droop schemes cannot be used to make these current sources share a common load because these droop schemes are strictly for voltage sources connected in parallel through inductances.

US patent 7 567 064 discloses an arrangement for supplying electric power of the type defined in the introduction with independent control of each converter.

GB 2429306 A discloses a controller 2 for regulating an inverter, wherein the controller is configured to derive a phase frequency reference signal and resolves relative to it both in phase and quadrature phase components of current and voltage and the inverter is configured to produces one or more phases of AC power. The phase and quadrature components arc compared to target values and the inverter is controlled in response. The target values of direct and quadrature components arc determined from a desired droop characteristic for the generator. The controller enables the inverter to be parallel connected to another inverter, a generator, a converter or a distribution network. The phase reference signal may be derived from the mean phase of output voltages by a phase locked loop.

SUMMARY OF THE INVENTION

The object of the present invention is to provide an arrangement and a method of the type disclosed above advising an advantageous alternative way of obtaining independent control of each converter of a plurality of voltage source converters connected in parallel to a filter bus through an inductor each and sharing a common load.

This object is according to the invention obtained by providing an arrangement according to the preamble of appended claim 1 with the further feature that said control unit for each converter also comprises fifth means configured to multiply each current vector or current reference vector with a droop coefficient common to all current vectors or current reference vectors and send the result of this multiplication to said third means for subtracting this result from the respective filter bus voltage reference vector.

Drooping the voltage reference vector components ensures that the control units will not fight with one another when controlling the respective converter and the converters may share a common real and reactive load while being independently controlled.

According to an embodiment of the invention each said control unit for the respective said converter further comprises sixth means configured to receive an unlimited current reference vector for each said filter bus voltage vector from said regulator and to limit the magnitude of each said unlimited current reference vector and send a limited current reference vector to said fourth means. This means that the magnitude of each current reference vector may be limited to not exceed a level that damages the converter.

According to the invention each said control unit for the respective converter further comprises seventh means configured to send a feed-forward signal representing the load current to eighth means configured to sum an output signal from said regulator so as to produce said current reference vector for each said filter bus voltage vector. Such a use of a load current feed-forward signal enhances the speed of response of the current control in the control of the respective converter during load changes.

According to other embodiments of the invention each said first means is configured to produce said filter bus voltage vectors according to the d-q frame or the $\alpha$-$\beta$ frame, and each said fourth means include a d-q current controller and an $\alpha$-$\beta$ current controller, respectively.

According to another embodiment of the invention the arrangement comprises a filter arranged between said first means and said third means for smoothing out said filter bus voltage vectors before reaching said third means.

A method for supplying electric power to a load through a filter bus by means of at least two Voltage Source Converters connected in parallel to said filter bus through an inductor each and configured to share said load enabling independent control of said converters is according to the invention defined in the appended independent method claim. Advantages and advantageous features of such a method and of the embodiments thereof defined in the dependent method claims appear clearly from the above discussion of the arrangement according to the present invention.

The invention also relates to a computer program product and a computer readable medium associated with a method according to the present invention.

Further advantages as well as advantageous features of the invention will appear from the following description.

BRIEF DESCRIPTION OF THE DRAWINGS

With reference to the appended drawings, below follows a specific description of an embodiment of the invention cited as an example.

In the drawings:

Fig 1      is a very schematic view of an arrangement of the type to which the invention belongs,

Fig 2      is a schematic simplified view of a possible control unit for an arrangement according to Fig 1 requiring a single master controller for controlling the converters in dependence of each other,

Fig 3      is a schematic view of the arrangement according to Fig 1 illustrating the control aimed at through control units according to Fig 2, and

Fig 4    is a view of a control unit in an arrangement according to the present invention having an individual controller for each converter connected in parallel.

DETAILED DESCRIPTION OF AN EMBODIMENT OF THE INVENTION

An arrangement according to an embodiment of the invention for supplying electric power to a load of the type shown in Fig 1 has for each converter thereof a control unit 10 shown in Fig 4 configured to regulate the voltage of the filter bus while maintaining dynamic control of the current from the converter. Each such control unit comprises first means 11 configured to produce two perpendicular-intersecting filter bus voltage vectors $v_{fx}$ and $v_{fy}$ from the filter bus voltage $v_f$. The first means may be configured to produce said filter bus voltage vectors according to the d-q frame or $\alpha$-$\beta$ frame. The control unit also comprises second means 12 configured to produce a filter bus voltage reference vector $v_{fx}^*$, $v_{fy}^*$ for each of said two filter bus voltage vectors. These filter bus voltage reference vectors may be set by an operator, which is then comprised in said second means, if the arrangement has one group of converters or higher level controls if the arrangement comprises several converter groups. The arrangement also comprises third means 13 configured to sum each said filter bus voltage vector $v_{fx}$, $v_{fy}$ and the filter bus voltage reference vector $v_{fx}^*$, $v_{fy}^*$ associated therewith. The control unit also comprises, for each of the two perpendicularly-intersecting vectors, a regulator 14 connected to receive the result of the summing of said third means to ensure that the filter bus voltage vector tracks its reference without any steady state error in principle.

Furthermore, the control unit comprises seventh means 19 configured to send a feed-forward signal representing the load current to eighth means 20 configured to sum an output signal from the regulator so as to produce an unlimited current reference vector $i_{kx-Un\,lim}^*$, $i_{ky-Un\,lim}^*$. This use of a load current feed-forward signal enhances the speed of response of the controller of the control unit controlling the converter during load changes. It may also be used to cancel the effect of coupling between said perpendicularly-intersecting vectors of the arrangement.

The control unit also comprises six means 21 in the form of a current limiter block configured to receive said unlimited current reference vector for each said filter bus voltage vector from the means 20 and to limit the magnitude of said unlimited current reference vector and send a limited current reference vector $i_{kx}^*$, $i_{ky}^*$ to fourth means 15 configured to involve current control in the control of the converter based on said current reference vectors for obtaining two vectors $i_{kx}$, $i_{ky}$ of the current from said converter perpendicularly-intersecting each other.

It is shown in Fig 4 how the control unit also comprises fifths means 22 configured to multiply each current vector $i_{kx}$, $i_{ky}$ of the k$^{th}$ converter with a common droop coefficient $D_{pri}$ and send the result of this multiplication to said third summing means 13 for subtracting this result from the respective filter bus voltage reference vector. In other words, the voltage reference vector for the k$^{th}$ converter is drooped against the components of the current vector of that converter.

Assuming no limiter action, the inputs of the regulators in Fig 4 must be zero in steady state. Thus, the steady state converter current vector components are given by

$$i_{kx} = \frac{v_{fx\_k}^* - v_{fx}}{D_{pri\_k}} \qquad (1)$$

$$i_{ky} = \frac{v_{fy\_k}^* - v_{fy}}{D_{pri\_k}} \qquad (2)$$

In a converter bank as shown in Fig 1, the filter bus voltage will be common to all the converters. Provided that all the converters have identical voltage vector component droop coefficients and voltage reference vectors, (1) and (2) imply that the rectangular components (perpendicularly-intersecting vectors) of the output current vector of the k$^{th}$ converter is equal to the corresponding components of the output current vectors of all the other converters in the same converter group. Thus, the converters share a common real and reactive load. Drooping the voltage reference vector components also ensures that the converter controllers included in said fourth means 15 do not fight with one another. Accordingly, the droop scheme shown in Fig 4 allows parallel operating converters, such as the ones shown in Fig 1, to jointly regulate the filter bus voltage vector while sharing a common load.

In addition to the above description of the control unit 10 shown in Fig 4 it may be mentioned that said fourth means 15 besides a d-q or α-β controller will include a PWM (Pulse Width Modulation) switching generator, a converter bridge and interface inductors, and the block 23 represents filter bus dynamics. It is also shown how a filter 24 is arranged between the first means 11 and the third means 13 for smoothing out the filter bus voltage vectors before reaching the third means. Besides the load current feed-forward branch there is also a voltage vector feed-forward branch not shown feeding forward a function of vq to the vd control path and a function of vd to the vq control path for decoupling d and q axis dynamics.

The invention is of course not in any way restricted to the embodiment described above, but many possibilities to modifications thereof would be apparent to a person with ordinary skill in the art.

The limited current reference vectors $i^*_{kx}$, $i^*_{ky}$ of the kth converter may be multiplied with a common droop coefficient instead of the current reference vectors $i_{kx}$, $i_{ky}$ if the current controller included in said fourth means is slow.

## Claims

1. An arrangement for supplying electric power to a load (8) through a filter bus, the arrangement comprising

   • at least two Voltage Source Converters (1-3) connected in parallel to said filter bus (4) through an inductor (5-7) each and configured to share said load, and
   • for each said converter, a control unit (10) configured to regulate the voltage of the filter bus while maintaining dynamic control of the current from the converter, each said control unit comprising

   a) first means (11) configured to produce two perpendicularly-intersecting filter bus voltage vectors ($v_{fx}$, $v_{fy}$) from said filter bus voltage ($v_f$),

   b) second means (12) configured to produce a filter bus voltage reference vector $(v^*_{fx}, v^*_{fy})$ for each of said two filter bus voltage vectors,

   c) third means (13) configured to sum each said filter bus voltage vector ($v_{fx}$, $v_{fy}$) and the filter bus voltage reference vector $(v^*_{fx}, v^*_{fy})$ associated therewith,

   d) a regulator (14) connected to receive the result of the summing of said third means so as to produce a current reference vector $(i^*_{kx-Un\,lim}, i^*_{ky-Un\,lim})$ for each said filter bus voltage vector ($v_{fx}$, $v_{fy}$), and

   e) fourth means (15) configured to involve current control in the control of said converter based on said current reference vectors for obtaining two vectors ($i_{kx}$, $i_{ky}$) of the current from said converter perpendicularly-intersecting each other,

   wherein said control unit also comprises fifth means (22) configured to multiply each said current vector ($i_{kx}$, $i_{ky}$) or current reference vector $(i^*_{kx-Un\,lim}, i^*_{kx-Un\,lim}, i^*_{kx}, i^*_{ky})$ with a droop coefficient ($D_{pri}$) common to all said current vectors or current reference vectors and send the result of this multiplication to said third means for subtracting this result from the respective filter bus voltage reference vector $(v^*_{fx}, v^*_{fy})$,
   **characterized in that** each said control unit (10) for the respective converter (1-3) further comprises seventh means (19) configured to send a feed-forward signal representing the load current to eighth means (20) configured to sum an output signal from said regulator (14) so as to produce said current reference vector for each said filter bus voltage vector ($v_{fx}$, $v_{fy}$).

2. An arrangement according to claim 1, **characterized in that** each said control unit (10) for the respective said converter (1-3) further comprises sixth means (21) configured to receive an unlimited current reference vector $(i^*_{kx-Un\,lim}, i^*_{ky-Un\,lim})$ for each said filter bus voltage vector from said regulator and to limit the magnitude of each said unlimited current reference vector and send a limited current reference vector $(i^*_{kx}, i^*_{ky})$ to said fourth means (15).

**3.** An arrangement according to any of the preceding claims, **characterized in that** each said first means (11) is configured to produce said filter bus voltage vectors according to the d-q frame, and that each said fourth means (15) include a d-q current controller.

**4.** An arrangement according to claim 1 or 2, **characterized in that** each said first means (11) is configured to produce said filter bus voltage vectors according to the α-β frame, and that each said fourth means (15) include an α-β current controller.

**5.** An arrangement according to any of the preceding claims, **characterized in that** it comprises a filter (24) arranged between said first means and said third means for smoothing out said filter bus voltage vectors before reaching said third means (13).

**6.** A method for supplying electric power to a load (8) through a filter bus (4) by means of at least two Voltage Source Converters (1-3) connected in parallel to said filter bus through an inductor (5-7) each and configured to share said load, in which the voltage of the filter bus is regulated while maintaining dynamic control of the current from each converter, said method comprises the following steps carried out for each converter:

1) producing two perpendicularly-intersecting filter bus voltage vectors ($v_{fx}$, $v_{fy}$) from said filter bus voltage ($v_f$),

2) producing a filter bus voltage reference vector $(v_{fx}^*, v_{fy}^*)$ for each of said two filter bus voltage vectors,

3) summing each said filter bus voltage vector ($v_{fx}$, $v_{fy}$) and the filter bus voltage reference vector $(v_{fx}^*, v_{fy}^*)$ associated therewith,

4) processing the result of said summing while producing a current reference vector $(i_{kx-Un\lim}^*, i_{ky-Un\lim}^*)$ for each said filter bus voltage vector ($v_{fx}$, $v_{fy}$), and

5) controlling each said converter while involving current control based on said current reference vector for obtaining two vectors ($i_{kx}$, $i_{ky}$) of the current from each converter perpendicularly-intersecting each other,

wherein the method comprises a further step 6) of multiplying each said current vector ($i_{kx}$, $i_{ky}$) or current reference vector $(i_{kx-Un\lim}^*, i_{kx-Un\lim}^*, i_{kx}^*, i_{ky}^*)$ with a droop coefficient ($D_{pri}$) common to all said current vectors or current reference vectors, and that in step 3) the result of this multiplication is subtracted from the respective filter bus voltage reference vector $(v_{fx}^*, v_{fy}^*)$,

**characterized in that** the method comprises a further step 7) of obtaining a feed-forward signal representing the load current, and **in that** in step 4) said feed-forward signal is used for producing said current reference vector for each said filter bus voltage vector.

**7.** The method according to claim 6, **characterized in that** in step 4) an unlimited current reference vector $(i_{kx-Un\lim}^*, i_{ky-Un\lim}^*)$ is first produced for each said filter bus voltage vector and the magnitude of each said unlimited current reference vector is then limited.

**8.** A method according to claim 6 or 7, **characterized in that** in step 1) said two perpendicularly-intersecting filter bus voltage vectors are produced according to the d-q frame, and that in step 5) said current control is a d-q current control.

**9.** A method according to claim 6 or 7, **characterized in that** in step 1) said two perpendicularly-intersecting filter bus voltage vectors are produced according to the α-β frame, and that in step 5) said current control is a α-β current control.

**10.** A computer program product storable on a computer usable medium containing instructions which, when the computer program is executed by a computer, cause the computer to carry out the steps of the method according to any of claims 6-9.

**11.** A computer program product according to claim 10 provided at least partially through a network, such as the Internet.

**12.** A computer readable medium, **characterized in that** it contains a computer program product according to claim 10.

**13.** Use of an arrangement according to any of claims 1-5 for supplying electric power from at least two Voltage Source Converters on shore to one or several ships connected to said filter bus.

**14.** Use of an arrangement according to any of claims 1-5 for supplying electric power from at least two Voltage Source Converters to one or several micro-grids connected to said filter bus.

**Patentansprüche**

**1.** Anordnung zur Versorgung einer Last (8) mit elektrischer Energie über einen Filterbus, wobei die Anordnung umfasst:

- mindestens zwei Spannungsquellenwandler (1-3), die über je eine Induktivität (5-7) parallel zu dem Filterbus (4) geschaltet und dazu ausgelegt sind, die Last zu teilen, und
- für jeden der Wandler eine Steuereinheit (10), die dazu ausgelegt ist, die Spannung des Filterbusses zu regulieren, während sie die dynamische Steuerung des Stroms vom Wandler aufrechterhält, wobei jede Steuereinheit umfasst

a) ein erstes Mittel (11), das dazu ausgelegt ist, zwei sich senkrecht schneidende Filterbusspannungsvektoren ($v_{fx}, v_{fy}$) aus der Filterbusspannung ($v_f$) zu erzeugen,

b) ein zweites Mittel (12), das dazu ausgelegt ist, einen Filterbusspannungs-Referenzvektor $(v_{fx}^*, v_{fy}^*)$ für jeden der beiden Filterbusspannungsvektoren zu erzeugen,

c) ein drittes Mittel (13), das dazu ausgelegt ist, jeden der genannten Filterbusspannungsvektoren ($v_{fx}, v_{fy}$) und den damit verbundenen Filterbusspannungs-Referenzvektor $(v_{fx}^*, v_{fy}^*)$ zu summieren,

d) einen Regler (14), der so angeschlossen ist, dass er das Ergebnis der Summierung des dritten Mittels empfängt, um einen Stromreferenzvektor $(i_{kx-Unlim}^*, i_{ky-Unlim}^*)$ für jeden der Filterbusspannungsvektoren ($v_{fx}, v_{fy}$) zu erzeugen, und

e) ein viertes Mittel (15), das dazu ausgelegt ist, die Stromsteuerung in die Steuerung des Wandlers basierend auf den Stromreferenzvektoren einzubeziehen, um zwei Vektoren ($i_{kx}, i_{ky}$) des Stroms aus dem Wandler zu erhalten, die sich senkrecht zueinander schneiden,

wobei die Steuereinheit auch ein fünftes Mittel (22) umfasst, das dazu ausgelegt ist, jeden der Stromvektoren ($i_{kx}$, $i_{ky}$) oder Stromreferenzvektoren $(i_{kx-Unlim}^*, i_{kx-Unlim}^*, i_{kx}^*, i_{ky}^*)$ mit einem allen Stromvektoren oder Stromreferenzvektoren gemeinsamen Droop-Koeffizienten ($D_{pri}$) zu multiplizieren und das Ergebnis dieser Multiplikation an das dritte Mittel zu senden, um dieses Ergebnis von dem jeweiligen Filterbusspannungs-Referenzvektor $(v_{fx}^*, v_{fy}^*)$ zu subtrahieren, **dadurch gekennzeichnet, dass** jede Steuereinheit (10) für den jeweiligen Wandler (1-3) ferner ein siebentes Mittel (19) umfasst, das dazu ausgelegt ist, ein den Laststrom darstellendes Vorwärtssteuersignal an ein achtes Mittel (20) zu senden, das dazu ausgelegt ist, ein Ausgangssignal von dem Regler (14) zu summieren, um den Stromreferenzvektor für jeden der Filterbusspannungsvektoren ($v_{fx}, v_{fy}$) zu erzeugen.

**2.** Anordnung nach Anspruch 1, **dadurch gekennzeichnet, dass** jede Steuereinheit (10) für den jeweiligen Wandler (1-3) ferner ein sechstes Mittel (21) umfasst, das dazu ausgelegt ist, einen unbegrenzten Stromreferenzvektor $(i_{kx-Unlim}^*, i_{ky-Unlim}^*)$ für jeden Filterbusspannungsvektor von dem Regler zu empfangen und die Größe jedes unbegrenzten Stromreferenzvektors zu begrenzen und einen begrenzten Stromreferenzvektor $(i_{kx}^*, i_{ky}^*)$ an das vierte Mittel (15) zu senden.

**3.** Anordnung nach einem der vorhergehenden Ansprüche, **dadurch gekennzeichnet, dass** jedes erste Mittel (11) dazu ausgelegt ist, die Filterbusspannungsvektoren gemäß dem d-q-Rahmen zu erzeugen, und dass jedes vierte Mittel (15) eine d-q-Stromsteuerung enthält.

**4.** Anordnung nach Anspruch 1 oder 2, **dadurch gekennzeichnet, dass** jedes erste Mittel (11) dazu ausgelegt ist, die Filterbusspannungsvektoren gemäß dem α-β-Rahmen zu erzeugen, und dass jedes vierte Mittel (15) eine α-β-Stromsteuerung enthält.

5. Anordnung nach einem der vorhergehenden Ansprüche, **dadurch gekennzeichnet, dass** sie einen Filter (24) umfasst, der zwischen dem ersten Mittel und dem dritten Mittel angeordnet ist, um die Filterbusspannungsvektoren zu glätten, bevor sie das dritte Mittel (13) erreichen.

6. Verfahren zur Versorgung einer Last (8) mit elektrischer Energie über einen Filterbus (4) mittels mindestens zwei Spannungsquellenwandlern (1-3), die über je eine Induktivität (5-7) parallel zu dem Filterbus geschaltet und dazu ausgelegt sind, die Last zu teilen, bei dem die Spannung des Filterbusses geregelt wird, während die dynamische Steuerung des Stroms von jedem Wandler aufrechterhalten wird, wobei das Verfahren die folgenden, für jeden Wandler ausgeführten Schritte umfasst:

1) Erzeugen zweier sich senkrecht schneidender Filterbusspannungsvektoren ($v_{rx}$, $v_{fy}$) aus der Filterbusspannung ($v_f$),

2) Erzeugen eines Filterbusspannungs-Referenzvektors $(v_{fx}^*, v_{fy}^*)$ für jeden der beiden Filterbusspannungsvektoren,

3) Summieren jedes der Filterbusspannungsvektoren ($v_{fx}$, $v_{fy}$) und der damit verbundenen Filterbusspannungs-Referenzvektoren $(v_{fx}^*, v_{fy}^*)$,

4) Verarbeiten des Ergebnisses der Summierung, während ein Strom-Referenzvektor $(i_{kx-Un\lim}^*, i_{ky-Un\lim}^*)$ für jeden Filterbusspannungsvektor ($v_{fx}$, $v_{fy}$) erzeugt wird, und

5) Steuern jedes der Wandler unter Einbeziehung einer Stromsteuerung basierend auf dem Stromreferenzvektor, um zwei Vektoren ($i_{kx}$, $i_{ky}$) des Stroms von jedem Wandler zu erhalten, die einander senkrecht schneiden,

wobei das Verfahren einen weiteren Schritt 6) des Multiplizierens jedes Stromvektors ($i_{kx}$, $i_{ky}$) oder Stromreferenzvektors $(i_{kx-Un\lim}^*, i_{kx-Un\lim}^*, i_{kx}^*, i_{ky}^*)$ mit einem allen Stromvektoren oder Stromreferenzvektoren gemeinsamen Droop-Koeffizienten ($D_{pri}$) umfasst, und dass in Schritt 3) das Ergebnis dieser Multiplikation von dem jeweiligen Filterbusspannungs-Referenzvektor $(v_{fx}^*, v_{fy}^*)$ subtrahiert wird, **dadurch gekennzeichnet, dass** das Verfahren einen weiteren Schritt 7) des Erhaltens eines Vorwärtssteuersignals umfasst, das den Laststrom repräsentiert, und dass in Schritt 4) das Vorwärtssteuersignal zum Erzeugen des Stromreferenzvektors für jeden Filterbusspannungsvektor verwendet wird.

7. Verfahren nach Anspruch 6, **dadurch gekennzeichnet, dass** in Schritt 4) zunächst ein unbegrenzter Stromreferenzvektor $(i_{kx-Un\lim}^*, i_{ky-Un\lim}^*)$ für jeden der Filterbusspannungsvektoren erzeugt wird und dann die Größe jedes unbegrenzten Stromreferenzvektors begrenzt wird.

8. Verfahren nach Anspruch 6 oder 7, **dadurch gekennzeichnet, dass** in Schritt 1) die beiden sich senkrecht schneidenden Filterbusspannungsvektoren gemäß dem d-q-Rahmen erzeugt werden, und dass in Schritt 5) die Stromsteuerung eine d-q-Stromsteuerung ist.

9. Verfahren nach Anspruch 6 oder 7, **dadurch gekennzeichnet, dass** in Schritt 1) die beiden sich senkrecht schneidenden Filterbusspannungsvektoren gemäß dem α-β-Rahmen erzeugt werden, und dass in Schritt 5) die Stromsteuerung eine α-β-Stromsteuerung ist.

10. Computerprogrammprodukt, das auf einem computerverwendbaren Medium gespeichert werden kann und Anweisungen enthält, die, wenn das Computerprogramm von einem Computer ausgeführt wird, den Computer veranlassen, die Schritte des Verfahrens gemäß einem der Ansprüche 6-9 durchzuführen.

11. Computerprogrammprodukt nach Anspruch 10, das zumindest teilweise über ein Netzwerk, wie beispielsweise das Internet, bereitgestellt wird.

12. Computerlesbares Medium, **dadurch gekennzeichnet, dass** es ein Computerprogrammprodukt nach Anspruch 10 enthält.

**13.** Verwenden einer Anordnung nach einem der Ansprüche 1-5 zur Versorgung eines oder mehrerer an den Filterbus angeschlossenen Schiffe mit elektrischer Energie von mindestens zwei Spannungsquellenwandlern an Land.

**14.** Verwenden einer Anordnung nach einem der Ansprüche 1-5 zur Versorgung eines oder mehrerer an den Filterbus angeschlossener Mikronetze mit elektrischer Energie von mindestens zwei Spannungsquellenwandlern.

**Revendications**

**1.** Agencement pour fournir de l'énergie électrique à une charge (8) à travers un bus filtre, l'agencement comprenant

• au moins deux convertisseurs de source de tension (1 à 3) connectés en parallèle audit bus filtre (4) à travers une bobine d'inductance (5 à 7) respective, et configurés pour partager ladite charge, et
• pour chaque dit convertisseur, une unité de commande (10) configurée pour réguler la tension du bus filtre tout en maintenant une commande dynamique du courant provenant du convertisseur, chaque dite unité de commande comprenant

a) des premiers moyens (11) configurés pour produire deux vecteurs de tension de bus filtre se recoupant perpendiculairement ($v_{fx}$, $v_{fy}$) à partir de ladite tension de bus filtre ($v_f$),
b) des deuxièmes moyens (12) configurés pour produire un vecteur de référence de tension de bus filtre ($v^*_{fx}$, $v^*_{fy}$) pour chacun desdits deux vecteurs de tension de bus filtre,
c) des troisièmes moyens (13) configurés pour additionner chaque dit vecteur de tension de bus filtre ($v_{fx}$, $v_{fy}$) et le vecteur de référence de tension de bus filtre ($v^*_{fx}$, $v^*_{fy}$) associé à ceux-ci,
d) un régulateur (14) connecté pour recevoir le résultat de l'addition desdits troisièmes moyens de façon à produire un vecteur de référence de courant ($i^*_{kx-unlim}$, $i^*_{ky-unlim}$) pour chaque dit vecteur de tension de filtre de bus ($v_{fx}$, $v_{fy}$), et
e) des quatrièmes moyens (15) configurés pour impliquer une commande de courant dans la commande dudit convertisseur sur la base desdits vecteurs de référence de courant pour obtenir deux vecteurs ($i_{kx}$, $i_{ky}$) du courant à partir desdits convertisseurs se recoupant perpendiculairement,

dans lequel ladite unité de commande comprend aussi des cinquièmes moyens (22) configurés pour multiplier chaque dit vecteur de courant ($i_{kx}$, $i_{ky}$) ou vecteur de référence de courant ($i^*_{kx-unlim}$, $i^*_{kx-unlim}$, $i^*_{kx}$, $i^*_{ky}$) par un coefficient d'affaissement ($D_{pri}$) commun à l'ensemble desdits vecteurs de courant ou vecteurs de référence de courant, et pour envoyer le résultat de cette multiplication auxdits troisièmes moyens pour soustraire ce résultat du vecteur de référence de tension de bus filtre ($v^*_{fx}$, $v^*_{fy}$) respectif,
**caractérisé en ce que** chaque dite unité de commande (10) pour le convertisseur respectif (1 à 3) comprend en outre des septièmes moyens (19) configurés pour envoyer un signal d'action directe représentant le courant de charge à des huitièmes moyens (20) configurés pour additionner un signal de sortie provenant dudit régulateur (14) de façon à produire ledit vecteur de référence de courant pour chaque dit vecteur de tension de bus filtre ($v_{fx}$, $v_{fy}$).

**2.** Agencement selon la revendication 1, **caractérisé en ce que** chaque dite unité de commande (10) pour ledit convertisseur respectif (1 à 3) comprend en outre des sixièmes moyens (21) configurés pour recevoir un vecteur de référence de courant illimité ($i^*_{kx-unlim}$, $i^*_{ky-unlim}$) pour chaque dit vecteur de tension de bus filtre provenant dudit régulateur pour limiter la grandeur de chaque dit vecteur de référence de courant illimité et pour envoyer un vecteur de référence de courant limité ($i^*_{kx}$, $i^*_{ky}$) auxdits quatrièmes moyens (15).

**3.** Agencement selon l'une quelconque des revendications précédentes, **caractérisé en ce que** chaque dit premier moyen (11) est configuré pour produire lesdits vecteurs de tension de bus filtre selon la trame dq, et **en ce que** chaque dit quatrième moyen (15) comprend un contrôleur de courant dq.

**4.** Agencement selon la revendication 1 ou 2, **caractérisé en ce que** chaque dit premier moyen (11) est configuré pour produire lesdits vecteurs de tension de bus filtre selon la trame $\alpha\beta$, et **en ce que** chaque dit quatrième moyen (15) comprend un contrôleur de courant $\alpha\beta$.

**5.** Agencement selon l'une quelconque des revendications précédentes, **caractérisé en ce qu'**il comprend un filtre (24) agencé entre lesdits premiers moyens et lesdits troisièmes moyens pour lisser lesdits vecteurs de tension de bus filtre avant d'atteindre lesdits troisièmes moyens (13).

**6.** Procédé pour fournir de l'énergie électrique à une charge (8) à travers un bus filtre (4) au moyen d'au moins deux convertisseurs de source de tension (1 à 3) connectés en parallèle audit bus filtre à travers une bobine d'inductance (5 à 7) respective, et configurés pour partager ladite charge, dans lequel la tension du bus filtre est régulée tout en maintenant une commande dynamique du courant provenant de chaque convertisseur, ledit procédé comprenant les étapes suivantes effectuées pour chaque convertisseur :

1) produire deux vecteurs de tension de bus filtre ($v_{fx}$, $v_{fy}$) se recoupant perpendiculairement à partir de ladite tension de bus filtre ($v_f$),
2) produire un vecteur de référence de tension de bus filtre ($v^*_{fx}$, $v^*_{fy}$) pour chacun desdits deux vecteurs de tension de bus filtre,
3) additionner chaque dit vecteur de tension de bus filtre ($v_{fx}$, $v_{fy}$) et le vecteur de référence de tension de bus filtre ($v^*_{fx}$, $v^*_{fy}$) associé à ceux-ci,
4) traiter le résultat de ladite addition tout en produisant un vecteur de référence de courant ($i^*_{kx-unlim}$, $i^*_{ky-unlim}$) pour chaque dit vecteur de tension de bus filtre ($v_{fx}$, $v_{fy}$), et
5) commander chaque dit convertisseur tout en impliquant une commande de courant basée sur ledit vecteur de référence de courant pour obtenir deux vecteurs ($i_{kx}$, $i_{ky}$) du courant à partir de chaque convertisseur se recoupant perpendiculairement,

le procédé comprenant une étape 6) supplémentaire consistant à multiplier chaque dit vecteur de courant ($i_{kx}$, $i_{ky}$) ou vecteur de référence de courant ($i^*_{kx-unlim}$, $i^*_{kx-unlim}$, $i^*_{kx}$, $i^*_{ky}$) par un coefficient d'affaissement ($D_{pri}$) commun à l'ensemble desdits vecteurs de courant ou vecteurs de référence de courant, et en ce qu'à l'étape 3) le résultat de cette multiplication est soustrait du vecteur de référence de tension de bus filtre respectif ($v^*_{fx}$, $v^*_{fy}$), **caractérisé en ce que** le procédé comprend une étape 7) supplémentaire consistant à obtenir un signal d'action directe représentant le courant de charge, et **en ce qu'**à l'étape 4) ledit signal d'action directe est utilisé pour produire ledit vecteur de référence de courant pour chaque dit vecteur de tension de bus filtre.

**7.** Procédé selon la revendication 6, **caractérisé en ce qu'**à l'étape 4) un vecteur de référence de courant illimité ($i^*_{kx-unlim}$, $i^*_{ky-unlim}$) est d'abord produit pour chaque dit vecteur de tension de bus filtre et la grandeur de chaque dit vecteur de référence de courant illimité est alors limitée.

**8.** Procédé selon la revendication 6 ou 7, **caractérisé en ce qu'**à l'étape 1) lesdits deux vecteurs de tension de bus filtre se recoupant perpendiculairement sont produits selon la trame dq, et **en ce qu'**à l'étape 5) ladite commande de courant est une commande de courant dq.

**9.** Procédé selon la revendication 6 ou 7, **caractérisé en ce qu'**à l'étape 1) lesdits deux vecteurs de tension de bus filtre se recoupant perpendiculairement sont produits selon la trame $\alpha\beta$, et **en ce qu'**à l'étape 5) ladite commande de courant est une commande de courant $\alpha\beta$.

**10.** Produit de programme informatique pouvant être stocké sur un support utilisable par ordinateur et contenant des instructions qui, lorsque le programme informatique est exécuté par un ordinateur, amènent l'ordinateur à effectuer les étapes du procédé selon l'une quelconque des revendications 6 à 9.

**11.** Produit de programme informatique selon la revendication 10, fourni au moins en partie à travers un réseau, tel que l'internet.

**12.** Support lisible par ordinateur, **caractérisé en ce qu'**il contient un produit de programme informatique selon la revendication 10.

**13.** Utilisation d'un agencement selon l'une quelconque des revendications 1 à 5 pour fournir de l'énergie électrique d'au moins deux convertisseurs de source de tension sur terre à un ou plusieurs bateaux connectés audit bus filtre.

**14.** Utilisation d'un agencement selon l'une quelconque des revendications 1 à 5 pour fournir de l'énergie électrique d'au moins deux convertisseurs de source de tension à un ou plusieurs microréseaux connectés audit bus filtre.

Fig 1

Fig 2

**Fig 3**

**Fig 4**

**EP 2 549 616 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7567064 B

- GB 2429306 A